# EUROPÄISCHE PATENTANMELDUNG

(11) **EP 4 001 852 A1**
(43) Veröffentlichungstag der Anmeldung: **25.05.2022**
(21) Anmeldenummer: 21199287.0
(22) Anmeldetag: 28.09.2021
(51) Int. Cl.: G01D 3/08, G01D 5/14, G01D 5/244

(54) **DREHGEBER**

(30) Priorität: 20.11.2020 DE 102020130781
(71) Anmelder: SICK AG, 79183 Waldkirch (DE)
(72) Erfinder: Hopp, Dr. David, 78166 Donaueschingen (DE); Dr. Süß, Sebastian, 78176 Blumberg (DE); Hogg, Stefan, 78667 Villingendorf (DE)

(57) **Zusammenfassung**

Um eine Wahrscheinlichkeit einer fehlerhaften Zählung einer Anzahl von Umdrehungen von in Eingriff zueinanderstehenden Zahnrädern zu minimieren, wird ein Drehgeber (1) zur Bestimmung einer Winkelposition einer Drehgeberwelle (W) zur Verfügung gestellt, umfassend die Drehgeberwelle (W), die mit einer externen Welle drehfest verbunden ist, zumindest ein Getriebe (G1), das mit der Drehgeberwelle (W) gekoppelt ist und zumindest eine Getriebestufe (GS1) aufweist, wobei die Getriebestufe (GS1) aus mindestens zwei in Eingriff zueinanderstehenden Zahnrädern (Z1, Z2; Z2, Z3) besteht und jedes Zahnrad (Z1, Z2, Z3) über eine jeweilige Lagereinheit (LE1, LE2, LE3) gelagert ist, zumindest eine Erfassungseinheit (E), die Drehungen wenigstens eines der Zahnräder (Z3) erfasst, und zumindest eine Leiterplatte (L), wobei die Leiterplatte (L) und/oder auf der Leiterplatte (L) angeordneten Bauteile (BT) derart benachbart zu dem Getriebe (G1) angeordnet ist bzw. sind, so dass eine axiale Bewegung der jeweiligen Zahnräder (Z1, Z2; Z2, Z3) relativ zueinander eingeschränkt ist, wobei die axiale Bewegung als eine Bewegung entlang einer Achse der jeweiligen Lagereinheiten (LE1, LE3) definiert ist.

## Beschreibung

Die Erfindung betrifft einen Drehgeber zur Bestimmung einer Winkelposition einer Drehgeberwelle gemäß dem Anspruch 1.

In vielfältigen Industrieanwendungen wird ein Drehgeber als eine Positionsmessvorrichtung eingesetzt, um eine mechanische Winkelposition zum Beispiel einer Welle einer Maschine zu bestimmen. Hierzu ist eine Drehgeberwelle des Drehgebers drehfest mit der Welle der Maschine verbunden, so dass eine Drehung der mit der Welle gekoppelten Drehgeberwelle erfassbar ist, aus der die Winkelposition der Welle der Maschine ableitbar ist.

Der Drehgeber kann auf einem optischen, kapazitiven, induktiven oder magnetischen Messprinzip beruhen. Die Bestimmung der Winkelposition kann inkrementell oder auch absolut erfolgen. Ein Drehgeber, der diese Winkelposition über 360° eindeutig bestimmt, wird auch als Singelturn-Drehgeber oder einfach Singleturn bezeichnet.

Als Erweiterung der Funktionalität des Drehgebers kann, neben einer Ermittlung der Winkelposition über nur eine Drehung der Drehgeberwelle um 360°, auch die Anzahl der erfolgten Drehungen erfasst und derart mechanisch oder elektrisch abgespeichert werden, so dass beim Einschalten des Drehgebers die Anzahl der erfolgten Drehungen eineindeutig ausgelesen werden kann. Ein Drehgeber, der auch die vollständigen Umdrehungen der Drehgeberwelle zählt, wird auch als Multiturn-Drehgeber oder einfach Multiturn bezeichnet. Dieser kann auch ausgebildet sein, insbesondere nach einer stromlosen Zeit, in welcher die Drehgeberwelle beispielsweise manuell gedreht werden kann, solche manuellen Drehungen auch im stromlosen Zustand zu zählen.

Bei einem getriebebasierten Multiturn-Drehgeber wird eine Drehbewegung der Drehgeberwelle des Drehgebers über eine mechanische Verzahnung abgegriffen, um eine serielle Übersetzungskaskade von Zahnrädern anzutreiben, wobei die Zahnräder eine stufenweise Übersetzung realisieren.

Die Winkelpositionen einzelner Zahnräder in dieser Übersetzungskaskade können nun wiederum analog zur Ermittlung der Winkelposition beim Singleturn ermittelt werden. Auf diese Weise lässt sich die in den Drehstellungen der Zahnräder mechanisch gespeicherte Anzahl vollständiger Umdrehungen der Drehgeberwelle beim Einschalten des Geräts ermitteln.

Eine gängige Implementierung eines getriebebasierten Drehgebers besteht beispielsweise aus mindestens einem Getriebe, das mit der Drehgeberwelle gekoppelt ist und zumindest eine Getriebestufe aufweist. Die Getriebestufe besteht aus mindestens zwei in Eingriff zueinanderstehenden Zahnrädern, deren Drehungen durch zumindest eine Erfassungseinheit erfasst werden. Hierbei ist die Winkelposition der Drehgeberwelle aus den erfassten Drehungen der Zahnräder ableitbar.

Um die Erfassung der Drehungen der Zahnräder zu realisieren, werden häufig Magnete auf die einzelnen Zahnräder aufgebracht, wobei Bewegungen der Magnete mittels Magnetsensoren, wie beispielsweise Hall-Sensoren, erfasst werden. Diese Magnetsensoren sind hierfür den Magneten gegenüberliegend zum Beispiel auf einer Leiterplatte angeordnet. Das heißt, die Magnete bilden zusammen mit den Magnetsensoren die erwähnte Erfassungseinheit.

Bei der obigen Implementierung des getriebebasierten Drehgebers besteht jedoch die Gefahr, dass die Zahnräder der Getriebestufe ihren Eingriff zueinander verlieren können, weil sich beispielsweise eines der beiden Zahnräder oder gar beide Zahnräder aus ihrer Lagerung löst bzw. lösen, so dass sich die Zahnräder voneinander wegbewegen. Hierdurch werden die Drehungen der Drehgeberwelle nicht mehr auf die Zahnräder übertragen und von den Magnetsensoren korrekt erfasst. Die Umdrehungen der Drehgeberwelle werden dadurch falsch gezählt.

Solch ein mögliches mechanisches Versagen des Getriebes führt dazu, dass ein einzelnes Getriebe nicht ohne Weiteres einer Anforderung einer Sicherheitsnorm bzgl. einer sicheren Erfassung der Drehungen bzw. einer sicheren Zählung der Umdrehungen der Drehgeberwelle, zum Beispiel im Sinne der sogenannten Functional Safety SIL2 bzw. SIL3 (Safety Integrity Level), genügt.

Um der genannten Anforderung der Sicherheitsnorm zu genügen, ist es beispielsweise möglich, zwei parallel angeordnete Getriebe vorzusehen und deren Zählung jeweils zu vergleichen. Dies bedingt jedoch den Einsatz zweier vollwertiger unabhängiger Getriebe sowie eine doppelte Anzahl an Magnetsensoren zur Erfassung der Drehungen derZahnräder.

Es ist eine Aufgabe der vorliegenden Erfindung, einen Drehgeber zur Bestimmung einer Winkelposition einer Drehgeberwelle zur Verfügung zu stellen, der eine sichere Bestimmung der Winkelposition gewährleistet.

Die Aufgabe wird erfindungsgemäß durch einen Drehgeber mit den Merkmalen des Anspruchs 1 gelöst.

Hierbei umfasst der Drehgeber zur Bestimmung einer Winkelposition einer Drehgeberwelle: die Drehgeberwelle, die mit einer externen Welle drehfest verbunden ist, zumindest ein Getriebe, das mit der Drehgeberwelle gekoppelt ist und zumindest eine Getriebestufe aufweist, wobei die Getriebestufe aus mindestens zwei in Eingriff zueinanderstehenden Zahnrädern besteht und jedes Zahnrad über eine jeweilige Lagereinheit gelagert ist, zumindest eine Erfassungseinheit, die Drehungen wenigstens eines der Zahnräder erfasst, und zumindest eine Leiterplatte, wobei die Leiterplatte und/oder auf der Leiterplatte angeordneten Bauteile derart benachbart zu dem Getriebe angeordnet ist bzw. sind, so dass eine axiale Bewegung der jeweiligen Zahnräder relativ zueinander eingeschränkt ist, wobei die axiale Bewegung als eine Bewegung entlang einer Achse der jeweiligen Lagereinheiten definiert ist.

Die Einschränkung der axialen Bewegung der jeweiligen Zahnräder stellt sicher, dass die Zahnräder ihren Eingriff ineinander nicht verlieren, beispielsweise im Fall eines Lösens eines der beiden Zahnräder von seiner Lagerung, so dass die erfassten Drehungen der Drehgeberwelle fehlerfrei übertragen werden können. Insbesondere liegt vorteilhafterweise die axiale Bewegung der jeweiligen Zahnräder innerhalb einer definierten Weglänge, die kleiner als eine maximale Breite des schmalsten Zahnrades von den beiden in Eingriff befindlichen Zahnräder ist. Hierdurch besteht für das schmalste Zahnrad der Getriebestufe keine Möglichkeit, sich aus dem Eingriff mit dem verbundenen breiteren Zahnrad zu lösen.

Gemäß einem bevorzugten Ausführungsbeispiel ist eine Form, insbesondere Erhöhungen und Vertiefungen, der Leiterplatte entsprechend einer Anordnung der Zahnräder ausgebildet, um die axiale Bewegung der jeweiligen Zahnräder zu begrenzen.

Weiterhin sind gemäß einem weiteren bevorzugten Ausführungsbeispiel die Bauteile auf der Leiterplatte derart angeordnet, so dass jedes Zahnrad in dessen axialer Bewegung von einem zugeordneten Bauteil eingegrenzt ist.

Hierdurch ergibt sich der technische Vorteil, dass keine zusätzlichen Bauteile benötigt werden, um die axiale Bewegung der Zahnräder einzuschränken. Dies kann zu einer Senkung der Kosten des Drehgebers durch Reduzierung der Anzahl an verwendeten Bauteile führen, so dass der Drehgeber insgesamt kostengünstiger gebaut werden kann. Vorteilhafterweise sind die Bauteile als passive Bauteile nur zum Begrenzen der axialen Bewegung derjeweiligen Zahnräder auf der Leiterplatte vorgesehen. Vorzugsweise sind die Bauteile als aktive Bauteile zum Ausführen von Funktionen des Drehgebers und zusätzlich zum Begrenzen der axialen Bewegung der jeweiligen Zahnräder vorgesehen.

Weiterhin ist gemäß einem bevorzugten Ausführungsbeispiel ein Teil der Zahnräder durch die Leiterplatte und ein anderer Teil der Zahnräder durch die auf der Leiterplatte angeordneten Bauteile in ihrer axialen Bewegung eingegrenzt.

Gemäß einem bevorzugten Ausführungsbeispiel ist zumindest ein Sensor vorgesehen, der die axiale Bewegung der jeweiligen Zahnräder erfasst. Vorteilhafterweise ist der Sensor ausgebildet, ein Warnsignal auszugeben, wenn die axiale Bewegung eines der Zahnräder einen Schwellenwert überschreitet. Dadurch wird eine Zuverlässigkeit des Drehgebers bzgl. einer sicheren Erfassung der Drehungen der Zahnräder verbessert, so dass die Anforderung der Sicherheitsnorm sicherer erfüllt wird.

Vorzugsweise ist gemäß einem bevorzugten Ausführungsbeispiel ein flexibles Material zwischen dem Zahnrad und der Leiterplatte oder zwischen dem Zahnrad und dem Bauteil auf der Leiterplatte vorgesehen, um das Zahnrad in Position zu halten. Das flexible Material bestehend aus beispielsweise einem Elastomer kann einerseits einen Druck auf das jeweilige Zahnrad ausüben, um das Zahnrad in seiner Betriebsposition zu halten, und andererseits einen möglichen Kontakt zwischen dem Zahnrad und der Leiterplatte bzw. dem Bauteil auf der Leiterplatte vermeiden.

Bei dieser Ausgestaltung des Drehgebers besteht die Lagereinheit vorzugsweise aus einem Lagerstift, einem als Lagerstift dienenden Befestigungsbolzen oder einem zylinderförmigen Absatz eines Gehäuseteils des Drehgebers.

Der erfindungsgemäße Drehgeber kann auf ähnliche Weise durch weitere Merkmale ausgestaltet werden und zeigt dabei ähnliche Vorteile. Derartige weitere Merkmale sind beispielhaft, aber nicht abschließend in den sich an den unabhängigen Anspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispiele erläutert.

In der Zeichnung zeigen:
- Fig. 1: eine schematische Darstellung eines Grundaufbaus eines Drehgebers,
- Fig. 2: eine schematische Seitenansicht eines bevorzugten Ausführungsbeispiels eines erfindungsgemäßen Drehgebers, und
- Fig. 3: eine schematische Seitenansicht eines weiteren bevorzugten Ausführungs-beispiels des erfindungsgemäßen Drehgebers.

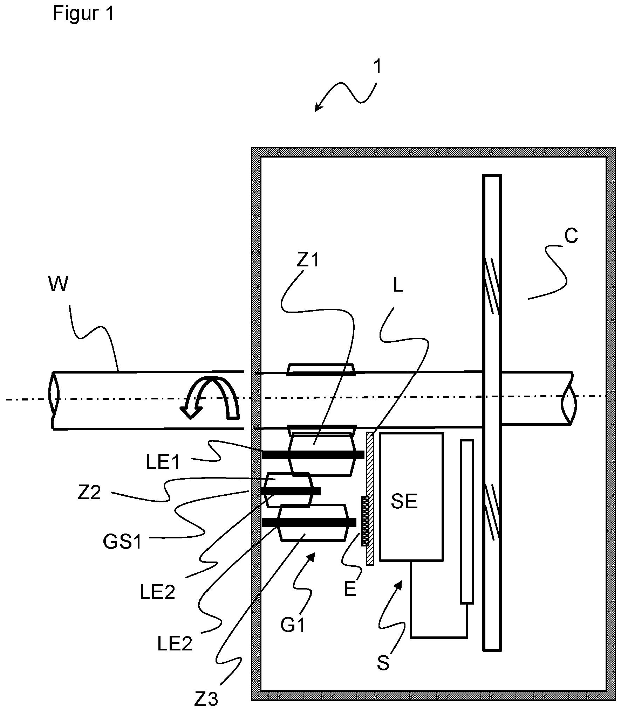

In der Figur 1 ist eine schematische Darstellung eines Ausführungsbeispiels eines Grundaufbaus eines Drehgebers 1 gezeigt, der Drehungen einer Drehgeberwelle W erfasst und daraus eine Winkelposition der Drehgeberwelle W bestimmt, um die Drehungen bzw. die Winkelposition einer nicht dargestellten, mit der Drehgeberwelle W drehfest verbundenen Welle von beispielsweise einer elektrischen Maschine zu steuern. Der Drehgeber 1 umfasst somit die Drehgeberwelle W, die durch die externe Welle der elektrischen Maschine angetrieben ist.

An der Drehgeberwelle W ist in der gezeigten schematischen Darstellung eine Singleturneinheit S vorgesehen, die die Winkelposition der Drehgeberwelle W innerhalb einer Drehung der Drehgeberwelle W ausgibt. Die in bevorzugter Weise vorgesehene Singleturneinheit S weist eine an die Drehgeberwelle W montierte Codierungseinheit C und eine Singleturn-Erfassungseinheit SE auf, so dass die Codierungseinheit C jede Winkeländerung der Drehgeberwelle W innerhalb einer Drehung moduliert und die Singleturn-Erfassungseinheit SE diese modulierte Winkeländerung erfasst und als Winkelpositionssignale ausgibt.

In diesem dargestellten bevorzugten Ausführungsbeispiel führt die gezeigte Singleturneinheit S eine Abtastung der Codierungseinheit C durch, um das Winkelpositionssignal zu erzeugen. Die Singleturneinheit S kann jedoch auch als Getriebe ausgestaltet sein, das jede Winkeländerung eines Zahnrades und damit auch die Winkeländerung der Drehgeberwelle W abgreift bzw. erfasst.

Der erfindungsgemäße Drehgeber 1 umfasst zumindest ein Getriebe G1, das mit der Drehgeberwelle W gekoppelt ist und zumindest eine Getriebestufe GS1 aufweist, wobei das Getriebe G1 Drehungen der Drehgeberwelle W wiedergibt.

Die Getriebestufe GS1 besteht aus mindestens zwei in Eingriff zueinanderstehenden Zahnräder Z1 und Z2. Die Getriebestufe GS1 kann auch aus dem Zahnrad an der Drehgeberwelle W und dem Zahnrad Z1 ausgebildet sein.

Bei dem dargestellten Ausführungsbeispiel weist die Getriebestufe GS1 drei Zahnräder Z1, Z2 und Z3 auf, wobei das erste Zahnrad Z1 durch die Drehgeberwelle W angetrieben wird. Das Zahnrad Z1 steht mit dem Zahnrad Z2 in Eingriff und das Zahnrad Z2 steht wiederum mit dem Zahnrad Z3 in Eingriff. Jedes Zahnrad Z1 bis Z3 ist über eine jeweilige Lagereinheit LE1, LE2 und LE3 gelagert. Auf der Lagereinheit LE1, LE2 und LE3 ist jedes Zahnrad Z1, Z2 bzw. Z3 in der Lage, eine axiale Bewegung relativ zu dem jeweiligen in Eingriff stehenden Zahnrad Z2 zu Z1 bzw. Z3 zu Z2 auszuführen. Hierbei ist die axiale Bewegung als eine Bewegung entlang einer Achse der jeweiligen Lagereinheiten LE1, LE2 bzw. LE3 definiert.

In diesem Zusammenhang sei erwähnt, dass unter "in Eingriff zueinanderstehend" zu verstehen ist, dass die Drehungen der Drehgeberwelle W über die Zahnräder Z1 bis Z3 übertragen werden, wobei es nicht zwingend erforderlich ist, dass sich beispielsweise die Zahnräder Z1 und Z3 in direktem Kontakt zueinander befinden müssen. Die Zahnräder Z1 und Z3 können in diesem Ausführungsbeispiel über das zwischengeschaltete Zahnrad Z2 zueinander in Eingriff stehen. Das heißt, die Zahnräder Z1 und Z3 befinden sich zwar in indirektem Kontakt zueinander, stehen aber nach Verständnis dieser Erfindung "in Eingriff zueinander".

Zumindest eine Erfassungseinheit E ist vorgesehen, die die Drehungen wenigstens eines der Zahnräder, in dem dargestellten Ausführungsbeispiel das Zahnrad Z3, erfasst. Aus den erfassten Drehungen lassen sich eine Anzahl der Umdrehungen der Drehgeberwelle W ermitteln. Zusätzlich wäre es denkbar, die Winkelposition der Drehgeberwelle W anstatt mittels der Singleturneinheit S aus den Drehungen des Zahnrads Z1 abzuleiten.

Die Erfassungseinheit E besteht vorzugsweise aus einem Hall-Sensor, der zumindest einen am Zahnrad befestigten und mit dem Zahnrad Z3 drehenden Magneten detektiert, um ein Messsignal zu erzeugen, aus dem die Winkelposition der Drehgeberwelle W abgeleitet werden kann.

Der erfindungsgemäße Drehgeber 1 umfasst zumindest eine Leiterplatte L, auf der Bauteile BT angeordnet sind, die beispielsweise eine Auswerteelektronik, eine Energieversorgungselektronik und/oder eine Kommunikationselektronik umfassen. Die Elektronik weist unter anderem Kondensatoren, Widerstände, Prozessoren usw. auf und ist im Folgenden nicht näher beschrieben.

Die Leiterplatte L und/oder die auf der Leiterplatte L angeordneten Bauteile BT sind derart benachbart zu dem Getriebe G1 angeordnet, dass die axiale Bewegung der jeweiligen Zahnräder Z1 zu Z2 bzw. Z2 zu Z3 relativ zueinander eingeschränkt ist. Das heißt, die Zahnräder Z1 und Z2 bzw. Z2 und Z3 können sich jeweils entlang der Achse ihrer jeweiligen Lagereinheit LE1, LE2 bzw. LE3 nur so weit relativ zueinander bewegen, wie die Leiterplatte L, die Bauteile BT auf der Leiterplatte L, oder die Leiterplatte L und die Bauteile BT es ihnen zulässt bzw. zulassen. Dadurch ist es sichergestellt, dass die Zahnräder Z1 und Z2 bzw. Z2 und Z3 den Eingriff zueinander nicht verlieren können.

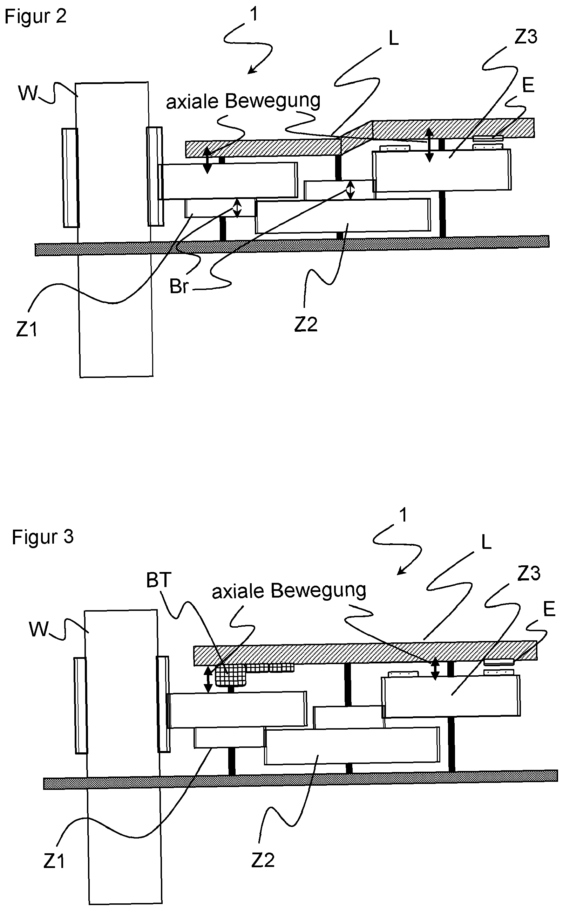

Die Figur 2 zeigt eine schematische Seitenansicht eines bevorzugten Ausführungsbeispiels eines erfindungsgemäßen Drehgebers 1, wobei gleiche Funktionselemente wie in der Figur 1 die gleichen Bezugszeichen aufweisen.

Bei dem dargestellten bevorzugten Ausführungsbeispiel ist die Leiterplatte L derart geformt, dass ihre Form entsprechend einer Anordnung der Zahnräder Z1 und Z3 ausgebildet ist, so dass die Leiterplatte L die axiale Bewegung (in Form der doppelseitigen schwarzen Pfeile angedeutet) der jeweiligen Zahnräder Z1 und Z3 entlang ihrer jeweiligen Lagereinheit LE1 und LE3 durch ihre Form einschränkt. Die Form der Leiterplatte L ist bezogen auf eine Ebene, die parallel zu den Zahnrädern Z1 und Z3 liegt, derart geknickt, dass die Leiterplatte L unterschiedlich weit von dieser Ebene beabstandet ist. Hierdurch ist es jedoch möglich, dass die Leiterplatte L derart benachbart zu den jeweiligen Zahnrädern Z1 und Z3 angeordnet ist, dass insbesondere die Einschränkung der axialen Bewegung der jeweiligen Zahnräder Z1 und Z3 innerhalb einer definierten Weglänge liegt, die kleiner als eine maximale Breite Br des schmalsten Zahnrades Z1 von den beiden in Eingriff befindlichen Zahnrädern Z2 ist.

Das heißt mit anderen Worten, die axiale Bewegung des jeweiligen Zahnrades Z1 bzw. Z3 ist derart begrenzt, dass sich das Zahnrad Z1 bzw. Z3 axial maximal so weit entlang der Achse der jeweiligen Lagereinheit LE1 bzw. LE3 hin und her bewegen kann, dass das Zahnrad Z1 bzw. Z3 auch in den Extrempunkten der Weglänge noch ausreichend Eingriff in das jeweilig benachbarten Zahnrad Z2 aufweist und damit dessen Funktion weiterhin sichergestellt ist.

Die schematische Seitenansicht eines weiteren bevorzugten Ausführungsbeispiels des erfindungsgemäßen Drehgebers 1 in der Figur 3 zeigt insbesondere eine Anordnung der Bauteile BT auf der Leiterplatte L, bei der das Zahnrad Z1 in dessen axialen Bewegung von einem zugeordneten Bauteil BT eingegrenzt ist. Bei diesem Ausführungsbeispiel sind das Zahnrad Z1 durch das Bauteil BT und das Zahnrad Z3 durch die Leiterplatte L selbst in ihren axialen Bewegungen eingeschränkt, so dass nicht nur die Leiterplatte L alleine oder die auf der Leiterplatte L angeordneten Bauteile BT zum Einschränken der axialen Bewegung der jeweiligen Zahnräder Z1 bzw. Z3 vorgesehen werden können, sondern sowohl die Leiterplatte L als auch die Bauteile BT für die Bewegungseinschränkung entsprechend ausgelegt werden können.

Bei Einschränkung der axialen Bewegung der Zahnräder Z1 bzw. Z3 durch die Bauteile BT, können die Bauteile BT passive Bauteile sein, die nur zum Begrenzen der axialen Bewegung der jeweiligen Zahnräder Z1 bzw. Z3 auf der Leiterplatte L vorgesehen sind. Die Bauteile BT können auch aktive Bauteile sein, die zum Ausführen von Funktionen des Drehgebers 1, wie beispielsweise Kondensatoren der erwähnten Energieversorgungselektronik, vorgesehen sind und zusätzlich die axiale Bewegung der jeweiligen Zahnräder Z1 bzw. Z3 begrenzen.

Hierdurch kann durch ein sorgfältiges Design der Leiterplatte L mit den Bauteilen BT eine einfache Beschränkung der axialen Bewegung der jeweiligen Zahnräder Z1 und Z3 erzielt werden.

Bei den gezeigten Ausführungsbeispielen in den Figuren 2 und 3 bestehen die Lagereinheiten LE1 bis LE3 vorzugsweise jeweils aus einem Lagerstift. Die Lagereinheiten LE1 bis LE3 können jedoch auch beispielsweise aus einem als Lagerstift dienenden Befestigungsbolzen oder einem zylinderförmigen Absatz eines Gehäuseteils des Drehgebers 1 bestehen.

Zusätzlich kann gemäß einem nicht dargestellten Ausführungsbeispiel zumindest ein Sensor vorgesehen sein, der die axiale Bewegung der jeweiligen Zahnräder Z1 bzw. Z3 erfasst. Der Sensor ist derart ausgebildet, ein Warnsignal auszugeben, wenn die axiale Bewegung eines der überwachten Zahnräder Z1 bzw. Z3 einen Schwellenwert überschreitet. Durch die Einschränkung und die gleichzeitige Überwachung der axialen Bewegung der Zahnräder Z1 bzw. Z3 kann die Zuverlässigkeit des Drehgebers 1 erhöht werden, so dass eine höhere Anforderung der Sicherheitsnorm erfüllt werden kann.

Weiterhin kann insbesondere ein flexibles Material zwischen dem in der axialen Bewegung einzuschränkenden Zahnrad Z1 bzw. Z3 und der Leiterplatte L oder zwischen dem in der axialen Bewegung einzuschränkenden Zahnrad Z1 bzw. Z3 und dem Bauteil BT auf der Leiterplatte L vorgesehen sein, um das Zahnrad Z1 bzw. Z3 in Position zu halten. Zusätzlich kann das flexible Material als Dämpfer wirken, um mögliche von dem Zahnrad Z1 bzw. Z3 ausgehende Stöße auf die Leiterplatte L oder auf das Bauteile BT zu kompensieren.

### Bezugszeichenliste

- 1: Drehgeber
- Br: Breite eines Zahnrades
- BT: Bauteil
- E: Erfassungseinheit
- G1: Getriebe
- GS1: Getriebestufe
- L: Leiterplatte
- LE1, LE2, LE3: Lagereinheit
- W: Drehgeberwelle
- Z1, Z2, Z3: Zahnrad

## Patentansprüche

1. Drehgeber (1) zur Bestimmung einer Winkelposition einer Drehgeberwelle (W), umfassend:
- die Drehgeberwelle (W), die mit einer externen Welle drehfest verbunden ist,
- zumindest ein Getriebe (G1), das mit der Drehgeberwelle (W) gekoppelt ist und zumindest eine Getriebestufe (GS1) aufweist, wobei die Getriebestufe (GS1) aus mindestens zwei in Eingriff zueinanderstehenden Zahnrädern (Z1, Z2; Z2, Z3) besteht und jedes Zahnrad (Z1, Z2, Z3) über eine jeweilige Lagereinheit (LE1, LE2, LE3) gelagert ist,
- zumindest eine Erfassungseinheit (E), die Drehungen wenigstens eines der Zahnräder (Z3) erfasst, und
- zumindest eine Leiterplatte (L),
wobei die Leiterplatte (L) und/oder auf der Leiterplatte (L) angeordneten Bauteile (BT) derart benachbart zu dem Getriebe (G1) angeordnet ist bzw. sind, so dass eine axiale Bewegung der jeweiligen Zahnräder (Z1, Z2; Z2, Z3) relativ zueinander eingeschränkt ist, wobei die axiale Bewegung als eine Bewegung entlang einer Achse der jeweiligen Lagereinheiten (LE1, LE3) definiert ist.

2. Drehgeber (1) nach Anspruch 1, wobei die axiale Bewegung der jeweiligen Zahnräder (Z1, Z3) innerhalb einer definierten Weglänge liegt, die kleiner als eine maximale Breite (Br) des schmalsten Zahnrades (Z1; Z2) von den beiden in Eingriff befindlichen Zahnrädern (Z2; Z3) ist.

3. Drehgeber (1) nach Anspruch 1 oder 2, wobei eine Form, insbesondere Erhöhungen und Vertiefungen, der Leiterplatte (L) entsprechend einer Anordnung der Zahnräder (Z1, Z3) ausgebildet ist, um die axiale Bewegung der jeweiligen Zahnräder (Z1, Z3) zu begrenzen.

4. Drehgeber (1) nach Anspruch 1 oder 2, wobei die Bauteile (BT) auf der Leiterplatte (L) derart angeordnet sind, so dass jedes Zahnrad (Z1, Z3) in dessen axialer Bewegung von einem zugeordneten Bauteil (BT) eingegrenzt ist.

5. Drehgeber (1) nach Anspruch 4, wobei die Bauteile (BT) als passive Bauteile nur zum Begrenzen der axialen Bewegung der jeweiligen Zahnräder (Z1) auf der Leiterplatte (L) vorgesehen sind.

6. Drehgeber (1) nach Anspruch 4, wobei die Bauteile (BT) als aktive Bauteile zum Ausführen von Funktionen des Drehgebers (1) und zusätzlich zum Begrenzen der axialen Bewegung der jeweiligen Zahnräder (Z1) vorgesehen sind.

7. Drehgeber (1) nach Anspruch 1 oder 2, wobei ein Teil der Zahnräder (Z3) durch die Leiterplatte (L) und ein anderer Teil der Zahnräder (Z1) durch die auf der Leiterplatte (L) angeordneten Bauteile (BT) in ihrer axialen Bewegung eingegrenzt ist.

8. Drehgeber (1) nach zumindest einem der vorhergehenden Ansprüche 1 bis 7, wobei zumindest ein Sensor vorgesehen ist, der die axiale Bewegung der jeweiligen Zahnräder (Z1, Z2, Z3) erfasst.

9. Drehgeber (1) nach Anspruch 8, wobei der Sensor ausgebildet ist, ein Warnsignal auszugeben, wenn die axiale Bewegung eines der Zahnräder (Z1, Z2, Z3) einen Schwellenwert überschreitet.

10. Drehgeber (1) nach zumindest einem der vorhergehenden Ansprüche 1 bis 9, wobei ein flexibles Material zwischen dem Zahnrad (Z1, Z3) und der Leiterplatte (L) oder zwischen dem Zahnrad (Z1) und dem Bauteil (BT) auf der Leiterplatte (L) vorgesehen ist, um das Zahnrad (Z1, Z3) in Position zu halten.

11. Drehgeber (1) nach zumindest einem der vorhergehenden Ansprüche 1 bis 10, wobei die Lagereinheit (LE1, LE2, LE3) aus einem Lagerstift, einem als Lagerstift dienenden Befestigungsbolzen oder einem zylinderförmigen Absatz eines Gehäuseteils des Drehgebers (1) besteht.
